# EUROPÄISCHE PATENTSCHRIFT

(11) **EP 2 079 153 B1**
(45) Veröffentlichungstag und Bekanntmachung des Hinweises auf die Patenterteilung: **02.07.2014**
(21) Anmeldenummer: 09000130.6
(22) Anmeldetag: 08.01.2009
(51) Int. Cl.: H02K 9/14, H02K 11/00, H02K 5/20, H02K 9/04

(54) **Elektrischer Antrieb für ein Flurförderzeug**
Electric drive for an industrial truck
Entraînement électrique pour un chariot de manutention

(30) Priorität: 10.01.2008 DE 102008003863
(43) Veröffentlichungstag der Anmeldung: 15.07.2009
(73) Patentinhaber: Jungheinrich Aktiengesellschaft, 22047 Hamburg (DE)
(72) Erfinder: Mänken, Frank, 24558 Henstedt-Ulzburg (DE); Weber, Christoph, 24558 Henstedt-Ulzburg (DE)
(74) Vertreter: Graalfs, Edo

(56) Entgegenhaltungen:
- EP-A1- 1 337 029
- EP-A1- 1 351 371
- DE-A1-102004 037 079
- DE-A1-102008 034 175
- DE-U1- 29 700 643
- FR-A1- 2 891 416

## Beschreibung

Die Erfindung bezieht sich auf einen elektrischen Antrieb für ein Flurförderzeug nach Patentanspruch 1.

Elektromotoren und elektronische Steueranordnungen für Elektromotoren für Flurförderzeuge entwickeln im Betrieb eine nicht unerhebliche Wärme, die durch Verluste in den Wicklungen und als Schalt- und Durchlassverluste in Halbleitern entstehen. Es ist bekannt, der Antriebssteuerung einen Lüfter zuzuordnen, welcher die vom Kühlkörper abgegebene Wärme abfördert. Die Elektromotoren in derartigen Antriebssystemen, die ebenfalls eine hohe Wärmeentwicklung aufweisen, werden in der Regel nicht belüftet. Ursache hierfür ist, dass das oftmals zylindrische und große Gehäuse des Motors sich schlecht mit einer Lüfteranordnung gleichförmig belüften lässt. Aus diesem Grunde werden die Motoren daher so dimensioniert, dass sie in ihren maximalen Betriebspunkten ihre Wärmeentwicklung vollständig über das Gehäuse abgeben können.

Aus DE 10 2005 017 736 A1 ist ein Antriebssystem für Flurförderzeuge bekannt geworden, bei dem ein Flüssigkeits-Kühlkreislauf vorgesehen ist, der die elektrischen und elektronischen Komponenten des Antriebssystems kühlt.

Aus EP 1 396 465 A2 ist ein Antrieb für ein Flurförderzeug bekannt geworden, bei dem sich innerhalb des Motorgehäuses die Steueranordnung sowie ein Lüfter befinden. Mit dem Lüfter findet nur eine Umwälzung der aufgewärmten Luft statt. Aus EP 1 306 465 A2 ist ein Antriebssystem für Flurförderzeuge bekannt geworden, bei dem an beiden Enden des Motors innerhalb des Motorgehäuses ein Lüfter vorgesehen ist, wobei in den Motorschilden Schlitze angeordnet sind, über welche Umgebungsluft angesaugt bzw. wieder abgegeben wird. Der Vorteil derartiger Belüftungen ist, dass die Lüfterwirkung ohne einen separaten Motor erfolgt, weil die Lüfterräder von der Motorwelle angetrieben sind. Nachteilig ist hingegen, dass bei kleinen Drehzahlen nahezu keine Lüfterwirkung eintritt. Dies ist z.B. der Fall, wenn ein Motor mit hohem Moment und mit niedriger Drehzahl betrieben wird, wie das z.B. beim fahrenden Flurförderzeug am Hang der Fall ist.

DE 297 00 643 U1 beschreibt ein Entwärmungskonzept für ein elektrisches Antriebssystem mit Motor, interiertem Umrichter und integrierter Antriebselektronik sowie Mitteln zur Fremdbelüftung.

FR 2 891 416 A1 beschreibt ein Belüftungssystem für Fahrzeugmotoren mit einem vorderen und einem hinteren Lüfter, angetrieben durch einen Rotor, und einem unabhängigen Lüfter, der für die Kühlung des Rotors bei geringer Rotationsgeschwindigkeit bestimmt ist.

DE 10 2008 034 175 A1 beschreibt einen elektrischen Antrieb bzw. einen Stromrichter, der ein Stromrichtergehäuse mit Kühlrippen aufweist.

Der Erfindung liegt die Aufgabe zugrunde, mit einfachen Mitteln eine gleichzeitige Lüftung einer Steueranordnung und eines Motors zu erzielen, die unabhängig von den Betriebsbedingungen des Motors wirksam ist.

Diese Aufgabe wird durch die Merkmale des Patentanspruchs 1 gelöst.

Bei dem erfindungsgemäßen elektrischen Antrieb ist ein Kühlkörper für die elektronische Steueranordnung an einem Motorschild angrenzend angeordnet. Eine topfförmige Haube umgibt die Steueranordnung von außen derart, dass zwischen der äußeren Stirnseite der Steueranordnung und dem Boden der Haube ein Zwischenraum und zwischen dem Umfang der Steueranordnung bzw. des Motorgehäuses in dem der Steueranordnung angrenzenden Bereich und der Innenseite der Wandhaube mindestens ein Spalt gebildet ist. An der Haube ist ein motorbetriebener Lüfter angeordnet, der Umgebungsluft in den Zwischenraum einträgt. Der Spalt bzw. das motorseitige Ende des Spalts ist im Querschnitt so bemessen, dass im Zwischenraum turbulente Luftströmung entsteht, wenn der Lüfter betrieben wird.

Der zusätzliche Elektromotor zum Antrieb des Lüfters kann relativ klein sein und erfordert daher nur einen geringen Mehraufwand. Da der Austrittsquerschnitt der Lüfterluft eng bemessen ist, kommt es im Zwischenraum, d.h. zwischen der Steueranordnung und der Bodenwand der Haube zu einer turbulenten Luftströmung. Die Luft kann nur über mindestens einen Schlitz entweichen. Vorzugsweise sind jedoch über den Umfang des Motors verteilt Schlitze vorgesehen, welche eine zusätzliche Kühlung des Motors führen. Die Luft streicht an der Gehäusewandung des Motors entlang und bewirkt auf diese Weise eine Kühlung des Motors.

Die turbulente Strömung unterhalb der elektronischen Steueranordnung sorgt für einen besseren Wärmeabtransport als dies bei einer rein laminaren Strömung der Fall wäre. Außerdem wird der Vorteil erzielt, dass das Motorgehäuse ebenfalls gekühlt wird, was die Leistungsausbeute des Motors verbessert.

Vorteilhafte Ausgestaltungen der Erfindung sind in Unteransprüchen angegeben.

Nach einer Ausgestaltung der Erfindung weist das Motorgehäuse an der Außenseite Rippen oder achsparallele Schlitze auf. Die Haube legt sich mit ihrer Wandung gegen die Außenseite der Rippen oder schließt an die Schlitze im Gehäuse des Motors an, sodass die z.B. im Ringspalt zwischen Steueranordnung und Seitenwand der Haube strömende Luft in die Schlitze eintreten kann, um das Motorgehäuse zu kühlen.

Nach einer anderen Ausgestaltung der Erfindung ist der Lüfter an der Außenseite der Seitenwand der Haube angebracht. Dies ist dann besonders vorteilhaft, wenn nach einer weiteren Ausgestaltung der Erfindung die Motorachse vertikal angeordnet ist, vorzugsweise mit nach unten weisender Motorwelle.

Nach einer weiteren Ausgestaltung der Erfindung können die Motorschilde Durchtrittsschlitze für Kühlluft aufweisen. In diesem Fall tritt die Kühlluft aus dem Zwischenraum zusätzlich in das Motorgehäuse hinein, um dort eine Kühlung zu bewerkstelligen. Es ist jedoch auch möglich, die Umfangsschlitze zwischen Haube und Motor bzw. Steueranordnung wegzulassen und die turbulente Strömung aus dem Zwischenraum nur in den Motor über Schlitze in den Motorschilden ein- bzw. austreten zu lassen.

Nach einer anderen Ausgestaltung der Erfindung ist zwischen dem Kühlkörper der Steueranordnung und dem Motor eine Schicht aus hochtemperaturfestem Kunststoff angeordnet. Die Schicht kann von einem Motorschild gebildet sein. Darüber hinaus kann nach einer anderen Ausgestaltung der Erfindung der Kühlkörper am Motorschild befestigt sein, wobei seine Umfangsausdehnung kleiner ist als die des Motorgehäuses.

Ein Ausführungsbeispiel der Erfindung ist nachfolgend anhand von Zeichnungen näher erläutert.

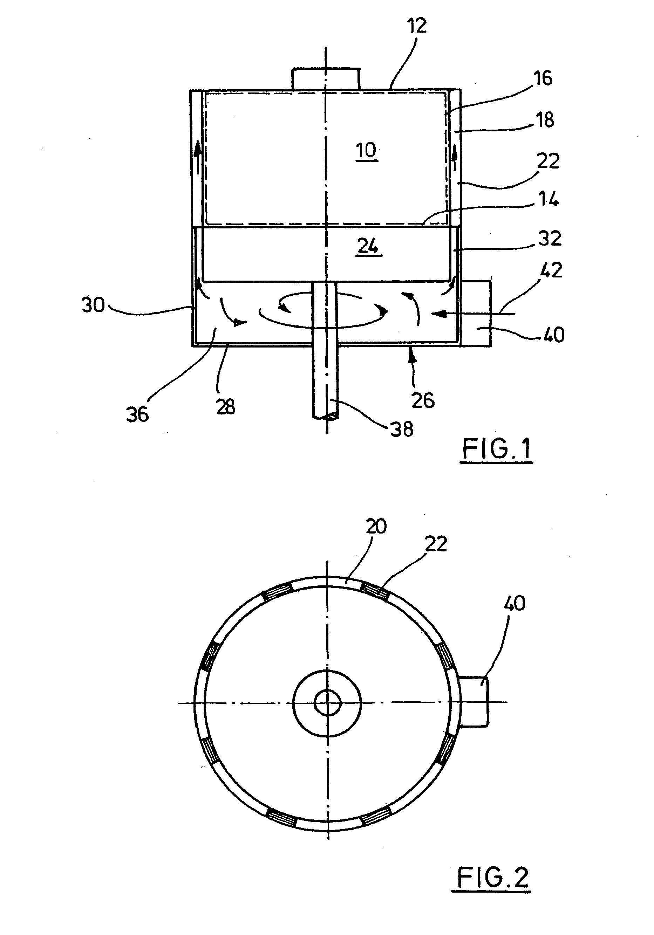

- Fig. 1: zeigt äußerst schematisch die Seitenansicht eines Antriebs für ein Flurförderzeug in Seitenansicht,
- Fig. 2: zeigt die Anordnung nach Figur 1 in Draufsicht.

Ein Elektromotor 10 weist ein Gehäuse auf mit Motorschilden 12, 14 und einer Seitenwand 16. Das Innere des Motors 10 ist nicht dargestellt. Die Seitenwand 16 weist einzelne achsparallele Schlitze 18 auf, wie sie in Figur 20 zu erkennen sind. Zwischen den Schlitzen 20 sind Rippen 22 gebildet. Statt geschlossener Schlitze können freistehende Rippen 22 vorgesehen werden, welche zwischen sich Lücken bilden.

Am Schild 14, der z.B. aus hochtemperaturfestem Kunststoff besteht, ist ein Kühlkörper 24 einer nicht weiter dargestellten elektronischen Steueranordnung für den Motor 10 angebracht. Eine Haube 26 weist einen Boden 28 und eine Seitenwand 30 auf. Die Seitenwand 30 umgibt mit geringem radialen Abstand den Kühlkörper 24, sodass dort ein Ringspalt 32 gebildet ist. Die Haube erstreckt sich bis zur Seitenwand 16 des Motors 10, wodurch der Ringspalt 32 in Strömungsverbindung mit den Schlitzen 20 steht. Zwischen der zugekehrten Stirnseite 24 und dem Boden 28 ist ein ringförmiger Zwischenraum 36 geformt, durch den sich hindurch eine Motorwelle 38 erstreckt. Der Durchtritt der Motorwelle 38 durch den Boden 28 ist weitgehend abgedichtet.

An der Außenseite der Seitenwand 30 ist ein motorbetriebener Lüfter 40 angebracht. Wie durch Pfeil 42 angedeutet, trägt der Lüfter 40 Umgebungsluft in den Zwischenraum 36. Da der Durchtritt der in den Zwischenraum 36 eingetragenen Kühlluft durch den Ringspalt 32 und die Spalten 20 im Querschnitt relativ eng bemessen wird, ergibt sich ein gewisser Stau in diesem Bereich, wodurch es im Zwischenraum 36 zu einer turbulenten Luftströmung kommt, wie durch die Pfeile angedeutet. Die turbulente Luftströmung sorgt für eine wirksame Kühlung des Kühlkörpers 24. Der Motor 10 erfährt ebenfalls eine Kühlung, indem die Kühlluft entlang der Seitenwand 16 strömt und damit eine Kühlung des Motors 10 erreicht wird.

Die Schilde 12, 14 können Durchtrittsschlitze aufweisen, um Kühlluft unmittelbar durch den Motor hindurchzuschicken. In diesem Fall können z.B. die Schlitze 20 in Fortfall kommen. Es ist jedoch auch möglich, sowohl eine Kühlung für die Schlitze 20 als auch über Schlitze in Schilden 12, 14 zu bewirken. Die letzteren Schlitze sind in den Figuren nicht gezeigt.

## Patentansprüche

1. Elektrischer Antrieb für ein Flurförderzeug mit einem Elektromotor mit Gehäuse und einer Motorwelle, einer elektronischen Steueranordnung für den Motor und einer Lüfteranordnung für den Motor und die elektronische Steueranordnung, **dadurch gekennzeichnet, dass** ein Kühlkörper (24) für die elektronische Steueranordnung an einen Motorschild (14) angrenzend angeordnet ist, dass eine topfförmige Haube (26) die Steueranordnung von außen so umgibt, dass zwischen der äußeren Stirnseite der Steueranordnung (24) und dem Boden (28) der Haube (26) ein Zwischenraum (36) und zwischen dem Umfang der Steueranordnung (24) bzw. des Motorgehäuses in dem an die Steueranordnung (24) angrenzenden Bereich und der Innenseite der Seitenwand (30) der Haube (26) mindestens ein Spalt (32, 20) gebildet ist, dass an der Außenseite der Seitenwand (30) der Haube (26) ein motorbetriebener Lüfter (40) angeordnet ist, der Umgebungsluft in den Zwischenraum (36) einträgt und der Spalt (20, 32) bzw. das motorseitige Ende des Spalts im Querschnitt so bemessen ist, dass im Zwischenraum (36) eine turbulente Luftströmung entsteht.

2. Elektrischer Antrieb nach Anspruch 1, **dadurch gekennzeichnet, dass** das Motorgehäuse an der Außenseite Rippen aufweist, an denen die Seitenwand der Haube anliegt.

3. Elektrischer Antrieb nach einem der Ansprüche 1 bis 2, **dadurch gekennzeichnet, dass** die Haube (26) auf der Motorwellenseite angeordnet ist, wobei die Motorwelle (38) annähernd dichtend aus der Haube (26) herausgeführt ist.

4. Elektrischer Antrieb nach Anspruch 3, **dadurch gekennzeichnet, dass** die Motorachse vertikal angeordnet ist, mit nach unten weisender Motorwelle (38).

5. Elektrischer Antrieb nach einem der Ansprüche 1 bis 4, **dadurch gekennzeichnet, dass** das Gehäuse Motorschilde (12,14) aufweist und die Motorschilde (12, 14) Durchtrittsschlitze für Kühlluft aufweisen.

6. Elektrischer Antrieb nach einem der Ansprüche 1 bis 5, **dadurch gekennzeichnet, dass** zwischen Kühlkörper (24) und dem Motor (10) eine Schicht aus hochtemperaturfestem Kunststoff angeordnet ist.

7. Elektrischer Antrieb nach Anspruch 6, **dadurch gekennzeichnet, dass** die Schicht von dem Motorschild an dem Kühlkörper (24) angrenzenden (14) gebildet ist.

8. Elektrischer Antrieb nach einem der Ansprüche 1 bis 7, **dadurch gekennzeichnet, dass** der Kühlkörper (24) am Motorschild (14) befestigt ist und mit seinen Umfangsabmessungen kleiner ist als die des Motorgehäuses.

## Claims

1. An electric drive for an industrial truck having an electric motor with housing and a motor shaft, an electronic control device for the motor and a fan device for the motor and the electronic control device, **characterized in that** a heat sink (24) for the electronic control device is arranged adjacent to a motor shield (14) such that a pot-shaped cap (26) surrounds the control device from the outside such that an interspace (36) is formed between the outer front side of the control device (24) and the bottom (28) of the cap (26), and at least one gap (32, 20) between the circumference of the control device (24) or the motor housing, respectively, in the region adjacent to the control device (24) and the inner side of the side wall (30) of the cap (26), that a motor-operated fan (40) is arranged on the outer side of the side wall (30) of the cap (26) which supplies air from the surroundings into the interspace (36), and the gap (20, 32) or the end of the gap at the motor side, respectively, is dimensioned such in cross section that a turbulent airflow is generated in the interspace (36).

2. The electric drive according to claim 1, **characterized in that** the motor housing has ribs on the outer side against which the side wall of the cap fits closely.

3. An electric drive according to one of claims 1 to 2, **characterized in that** the cap (26) is arranged on the motor shaft side, the motor shaft (38) being guided out of the cap (26) in an approximately sealing manner.

4. The electric drive according to claim 3, **characterized in that** the motor axis is arranged vertically, with motor shaft (38) pointing towards the downside.

5. An electric drive according to any one of claims 1 to 4, **characterized in that** the housing has motor shields (12, 14) and the motor shields (12, 14) have passage slots for cooling air.

6. An electric drive according to any one of claims 1 to 5, **characterized in that** a layer of high-temperature resistant plastics is arranged between the heat sink (24) and the motor (10).

7. The electric drive according to claim 6, **characterized in that** the layer is formed by the motor shield (14) which is adjacent to the heat sink (24).

8. An electric drive according to any one of claims 1 to 7, **characterized in that** the heat sink (24) is fastened on the motor shield (14) and has smaller circumference dimensions than those of the motor housing.

## Revendications

1. Entraînement électrique pour un chariot de manutention qui a un moteur électrique avec un boîtier et un arbre moteur, un ensemble électronique de commande pour le moteur et un ensemble de ventilateur pour le moteur et l'ensemble électronique de commande, **caractérisé en ce que** un dissipateur thermique (24) pour l'ensemble électronique de commande est arrangé à proximité d'une plaque de moteur (14) de sorte que un capot (26) en forme de pot entoure l'ensemble de commande de l'extérieur de telle manière qu'un espace interstitiel (36) est formé entre le côté frontal extérieur de l'ensemble de commande (24) et le fonds (28) du capot (26), et au moins une fente (32, 20) entre la circonférence de l'ensemble de commande (24) ou respectivement le boîtier de moteur dans la région à proximité de l'ensemble de commande (24) et la face intérieure de la paroi latérale (30) du capot (26), qu'un ventilateur à moteur (40) est arrangé sur la face extérieure de la paroi latérale (30) du capot (26) qui fournit de l'air ambiant à l'espace interstitiel (36), et la fente (20, 32) ou respectivement l'extrémité de la fente côté moteur est dimensionnée tellement que un courant d'air turbulent est généré dans l'espace interstitiel (36).

2. Entraînement électrique selon la revendication 1, **caractérisé en ce que** le boîtier du moteur a des nervures sur la face extérieure contre lesquelles la paroi latérale du capot fait appui.

3. Entraînement électrique selon une des revendications 1 à 2, **caractérisé en ce que** le capot (26) est arrangé au côté arbre moteur, l'arbre moteur (38) sortant du capot (26) de manière approximativement étanche.

4. Entraînement électrique selon la revendication 3, **caractérisé en ce que** l'axe de moteur est arrangé verticalement, l'arbre moteur (38) montrant vers le bas.

5. Entraînement électrique selon l'une quelconque des revendications 1 à 4, **caractérisé en ce que** le boîtier a des plaques de moteur (12, 14) et les plaques de moteur (12, 14) ont des encoches de refroidissement pour air de refroidissement.

6. Entraînement électrique selon l'une quelconque des revendications 1 à 5, **caractérisé en ce que** une couche de matière plastique résistante à très hautes températures est arrangée entre le dissipateur thermique (24) et le moteur (10).

7. Entraînement électrique selon la revendication 6, **caractérisé en ce que** la couche est formée par la plaque de moteur (14) à proximité du dissipateur thermique (24).

8. Entraînement électrique selon l'une quelconque des revendications 1 à 7, **caractérisé en ce que** le dissipateur thermique (24) est attaché dans la plaque de moteur (14) et a des dimensions circonférentielles plus petites que celles du boîtier de moteur.
